# EUROPÄISCHE PATENTSCHRIFT

(11) **EP 2 164 817 B1**
(45) Veröffentlichungstag und Bekanntmachung des Hinweises auf die Patenterteilung: **22.04.2015**
(21) Anmeldenummer: 08785326.3
(22) Anmeldetag: 01.07.2008
(51) Int. Cl.: C04B 28/00

(54) **UNGEFORMTER FEUERFESTER WERKSTOFF, EIN VERFAHREN ZUR ERSTELLUNG EINES ERDFEUCHTEN UNGEFORMTEN FEUERFESTEN WERKSTOFFS SOWIE EINE VERWENDUNG DES UNGEFORMTEN FEUERFESTEN WERKSTOFFS**
UNSHAPED REFRACTORY MATERIAL, A PROCESS FOR PRODUCING AN EARTH-MOIST, UNSHAPED REFRACTORY MATERIAL, AND USE OF THE UNSHAPED REFRACTORY MATERIAL
MATÉRIAU RÉFRACTAIRE INFORME, PROCÉDÉ DE PRÉPARATION D'UN MATÉRIAU RÉFRACTAIRE INFORME HUMIDE ET UTILISATION DU MATÉRIAU RÉFRACTAIRE INFORME

(30) Priorität: 14.07.2007 DE 102007032892
(43) Veröffentlichungstag der Anmeldung: 24.03.2010
(73) Patentinhaber: Refractory Intellectual Property GmbH & Co. KG, 1100 Wien (AT)
(72) Erfinder: PETRITZ, Bernd, A-8663 Veitsch (AT); LÜFTENEGGER, Alfons, Munster, IN 46321 (US)
(74) Vertreter: Becker, Thomas
(86) Internationale Anmeldenummer: PCT/EP2008/006396
(87) Internationale Veröffentlichungsnummer: WO 2009/010311

(56) Entgegenhaltungen:
- WO-A-94/14727
- WO-A1-2005/049526
- DE-A1- 3 615 506
- DE-A1- 19 931 680
- DE-C- 11 348
- US-A- 3 916 047
- US-A- 5 507 474
- US-A- 5 954 872
- US-A1- 2002 009 622
- US-A1- 2003 092 554
- US-A1- 2006 009 346
- DATABASE WPI Week 200112 Thomson Scientific, London, GB; AN 2001-106265 XP002506361 -& JP 2000 302561 A (KAWASAKI ROZAI KK) 31. Oktober 2000 (2000-10-31)

## Beschreibung

Die Erfindung betrifft einen ungeformten feuerfesten Werkstoff, ein Verfahren zur Erstellung eines erdfeuchten ungeformten feuerfesten Werkstoffs sowie eine Verwendung des ungeformten feuerfesten Werkstoffs.

Ungeformte feuerfeste Werkstoffe, auch feuerfeste Massen genannt, bestehen aus einem Gemenge, das aus einer feuerfesten Basiskomponente und Bindemittel besteht.

Ungeformte feuerfeste Werkstoffe werden insbesondere als Baumasser, Reparatur- und Pflegemassen sowie als Mörtel eingesetzt. Bau-, Reparatur- und Pflegemassen werden insbesondere zum Bauen, Reparieren und Pflegen der Innenauskleidung von Gefäßen zur Stahlherstellung eingesetzt, beispielsweise Aggregate zum Schmelzen oder Behandeln von flüssigem Stahl.

US5954872 offenbart einen Feuerfestbeton, enthaltend eine feuerfeste Komponente und eine Bindemittelkomponente in Form eines Säure-Base-Binders, welcher unter Ablauf einer exothermen Reaktion abbindet. Der Feuerfestbeton wird als Trockenmischung vorgemischt und mit Wasser zum Abbinden gebracht. Beispiel 1 zeigt eine Trockenmischung enthaltend Olivin als feuerfeste Komponente, Aluminiumphosphat und MgO als Bindemittelkomponenten. Die Trockenmischung wird mit Wasser angemacht und eine exotherme Abbindereaktion erzeugt.

Die Verfestigung beziehungsweise Aushärtung der ungeformten feuerfesten Werkstoffe kann auf verschiedene Arten erfolgen. So sind beispielsweise hydraulische Systeme bekannt, bei denen nach Zugabe von Wasser eine hydraulische Bindung zum Erhärten des ungeformten feuerfesten Werkstoffs führt. Auch sind keramische Bindungstypen bekannt, bei denen die Erhärtung durch eine Temperaturbehandlung und einer damit einhergehenden Versinterung erfolgt. Ferner sind auch sogenannte kalthärtende Massen bekannt, bei denen die Verfestigung über eine chemische oder organische Bindung erfolgt.

Die feuerfeste Basiskomponente kann aus einem oder mehreren feuerfesten Stoffen bestehen, beispielsweise Stoffen auf Basis des Systems Al₂O₃-SiO₂ (saure feuerfeste Werkstoffe) oder auf Basis basischer feuerfester Werkstoffe, beispielsweise Werkstoffen auf Basis MgO.

Ein wichtiges Einsatzgebiet ungeformter feuerfester Werkstoffe ist deren Verwendung als Tundishmassen beziehungsweise Tundishverschleißfuttermassen. Hierzu werden insbesondere basische Massen eingesetzt, die dann die feuerfeste Innenauskleidung des Tundish bilden.

Auch für Tundishmassen kommen kalthärtende Massen zum Einsatz. Der Vorteil von kalthärtenden Massen liegt insbesondere darin, dass keine zusätzliche Wärmeenergie aufgebracht werden muss, um eine Bindung in der Masse auszulösen. Vielmehr werden bei diesen Massentypen regelmäßig eines oder mehrere klebflüssige Bindemittel eingesetzt, zum Beispiel Wasserglas, Kunstharz sowie schwefel- oder phenolhaltige Bindemittel. Der Nachteil dieser Bindemittel liegt jedoch darin, dass sowohl die Handhabung der Bindemittel als auch des damit angemachten ungeformten feuerfesten Werkstoffs sehr aufwendig ist. Dies liegt insbesondere auch an den klebenden Eigenschaften der Bindemittel, die dazu führen, dass die Maschinen, in denen die Bindemittel und der damit angemachte ungeformte feuerfeste Werkstoff behandelt werden, durch die Bindemittel verklebt werden können. Aus diesem Grund müssen vielfach komplizierte und damit teuere Maschinen eingesetzt werden, beispielsweise teure Mischmaschinen, die zudem regelmäßig gereinigt werden müssen. Ferner sind einige dieser klebflüssigen Bindemittel geruchsbelästigend, entzündlich oder giftig, so dass die Maschinen zur Handhabung der Bindemittel oder der damit angemachten Massen aufwendig gekapselt werden müssen. Auch müssen manche dieser Bindemittel ständig kühl gelagert werden, da es ansonsten zu einer unerwünschten Aushärtung beziehungsweise Verfestigung des Bindemittels kommen kann, bevor das Bindemittel der Masse zugegeben worden ist. Umgekehrt ist es teilweise auch notwendig, den mit solch klebflüssigen Bindemitteln angemachten ungeformten feuerfesten Werkstoff zur Auslösung der Bindereaktion der Bindemittel zu erwärmen.

Der Erfindung liegt die Aufgabe zugrunde, eine kalthärtende Masse, also einen ohne den Einsatz von externer Wärmeenergie verwendbaren ungeformten feuerfesten Werkstoff, zur Verfügung zu stellen, der ohne die Verwendung klebflüssiger Bindemittel einsetzbar ist. Insbesondere sollen zum Anmachen des ungeformten feuerfesten Werkstoffs keine solchen flüssigen Bindemittel notwendig sein, die geruchsbelästigend, giftig oder entzündlich sind. Ferner soll der ungeformte feuerfeste Werkstoff ohne den Einsatz zusätzlicher externer Wärmeenergie einsetzbar sein, sich also ohne den Einsatz zusätzliche externer Wärmeenergie verfestigen beziehungsweise aushärten.

Zur Lösung dieser Aufgabe wird zur Verfügung gestellt ein ungeformter feuerfester Werkstoff in Form einer Trockenmischung mit
- einer feuerfesten Basiskomponente und
- einer Bindemittelkomponente, wobei die Bindemittelkomponente eine saure Komponente und eine basische Komponente aufweist.

Die Erfindung beruht auf der Grundüberlegung, eine solche Bindemittelkomponente in dem ungeformten feuerfesten Werkstoff vorzusehen, die eine saure Komponente und eine basische Komponente aufweist. Der Einsatz einer solchen Bindemittelkomponente beruht auf der Erkenntnis, dass aus einer sauren Komponente und einer basischen Komponente allein durch die Zugabe von Wasser (Anmachwasser) ein Bindemittel erstellbar ist, das zur Verfestigung beziehungsweise Aushärtung des ungeformten feuerfesten Werkstoffs führt.

Der erfindungsgemäße ungeformte feuerfeste Werkstoff ist daher allein mit Wasser anzumachen, um einen gebrauchsfertigen, plastischen ungeformten feuerfesten Werkstoff zu erhalten. Der Einsatz von klebflüssigen Bindemitteln ist daher nicht weiter notwendig. Die vorgenannten Nachteile, die bei der Verwendung von klebflüssigen Bindemitteln auftreten, entfallen damit vollständig.

Es hat sich herausgestellt, dass sich aus einer erfindungsgemäß zusammengesetzten Bindemittelkomponente ein solch hervorragendes Bindemittel erstellen lässt, dass die Bindemittelkomponente des anmeldungsgemäßen Werkstoffs nach einer bevorzugten Ausführungsform der Erfindung neben der sauren Komponente und der basischen Komponente - in dem noch nicht mit Wasser angemachten Zustand - keine weitere Komponente aufweist.

Bei der sauren Komponente handelt es sich um eine in wässriger Umgebung beziehungsweise in wässriger Lösung saure Wirkung entfaltende Komponente. Die saure Komponente liegt in Form wenigstens eines der folgenden Stoffe vor: Säure, Salz einer Säure, Ester einer Säure als Sulfonat, Sulphat oder Carbonat.

Der ungeformte feuerfeste Werkstoff weist besonders bevorzugt eine saure Komponente in Form wenigstens einer Säure auf, bevorzugt in Form wenigstens einer schwachen bis mittelschwachen organischen Säure, insbesondere in Form einer schwachen organischen Säure.

Beispielsweise kann eine saure Komponente in Form wenigstens einer der folgenden Stoffe vorgesehen sein: Zitronensäure, Amidosulfonsäure, Apfelsäure, Weinsäure, Ameisensäure, Essigsäure, Oxalsäure, Borsäure, Natriumbicarbonat, Ligninsulfonat, Hydrogenphosphat, Hydrogensulfat, Natriummetaphoshphat.

Die vorgenannten sauren Komponenten können in beliebiger Kombination als saure Komponente eingesetzt werden. Eine bevorzugte Kombination von sauren Komponenten stellt beispielsweise die Kombination von Amidosulfonsäure und Borsäure dar.

Bei der basischen Komponente handelt es sich bevorzugt um eine in wässriger Umgebung beziehungsweise in wässriger Lösung basische Wirkung entfaltende Komponente. Die basische Komponente liegt in Form wenigstens eines der folgenden Stoffe vor: Urotropin (Hexamethylentetramin), Calciumoxid, Calciumhydroxid, Natriumhydroxid, Kaliumhydroxid oder Magnesiumhydroxid.

Die vorgenannten basischen Komponenten können in beliebiger Kombination als basische Komponente eingesetzt werden.

Die vorgenannten sauren und basischen Komponenten können in beliebiger Kombination als Bindemittelkomponente eingesetzt werden.

Beispielsweise kann die Bindemittelkomponente des ungeformten feuerfesten Werkstoffs eine der folgenden Kombinationen von saurer und basischer Komponente aufweisen:
Zitronensäure und Kalkhydrat;
Zitronensäure und Calciumoxid;
Natriummetaphosphat und Kalkhydrat;
Amidosulfonsäure, Borsäure und Kalkhydrat.

Besonders bevorzugt weist der ungeformte feuerfeste Werkstoff eine saure Komponente in Form wenigstens einer Säure und eine basische Komponente in Form wenigstens einer Base auf, welche erst unter Zugabe von Wasser in einer Säure-Base-Reaktion miteinander reagieren. Insbesondere kann eine saure Komponente in Form wenigstens einer Säure und eine basische Komponente in Form wenigstens einer Base vorgesehen sein, die unter Zugabe von Wasser in einer exothermen Reaktion, insbesondere einer exothermen Säure-Base-Reaktion reagieren. Der besondere Vorteil einer solch exothermen Reaktion liegt darin, dass durch die damit einhergehende Temperaturerhöhung die zur Aushärtung des ungeformten feuerfesten Werkstoffs benötigte Zeit deutlich reduziert werden kann gegenüber der Aushärtzeit von ungeformten feuerfesten Werkstoffen nach dem Stand der Technik, bei denen keine exotherme Reaktion einer sauren und einer basischen Komponente mit Wasser auslösbar ist.

Erfindungsgemäß hat sich herausgestellt, dass ein besonders vorteilhafter Verfestigungsverlauf beziehungsweise eine besonders günstige Aushärtung bei dem erfindungsgemäßen Werkstoff dadurch erreicht werden kann, dass die vorgenannte exotherme Reaktion die Temperatur des Werkstoffs um wenigstens 5°C, also beispielsweise auch um wenigstens 8°C oder um wenigstens 10°C erhöht. Ferner kann insbesondere vorgesehen sein, dass durch die exotherme Reaktion die Temperatur des Werkstoffs um höchstens 30°C, also beispielsweise auch um höchstens 18°C erhöhbar ist. Durch die exotherme Reaktion ist die Temperatur des Werkstoffs demnach beispielsweise um 5 bis 30°C, um 8 bis 30°C oder beispielsweise um 10 bis 30°C erhöhbar. Mit anderen Worten: Die saure Komponente und die basische Komponente des ungeformten feuerfesten Werkstoffs sind derart aufeinander abgestimmt, dass diese nach Zugabe von Wasser in einer solchen exothermen Reaktion, insbesondere in einer Säure-Base-Reaktion, miteinander reagieren, dass durch diese Reaktion die Temperatur des Werkstoffs um den vorgenannten Temperaturbereich erhöht wird. Bei dieser Temperaturerhöhung läuft die Aushärtung des ungeformten feuerfesten Werkstoffs ausreichend schnell ab, aber nicht zu schnell und auch nicht unter einer heftigen Reaktion der sauren und der basischen Komponente mit Wasser.

Der Anteil an saurer Komponente im ungeformten feuerfesten Werkstoff beträgt 1,5 bis 6 Gew.-%.

Die Anteile an Gew.-% beziehen sich, soweit hierin nicht anders angegeben, grundsätzlich auf das Gesamtgewicht des ungeformten feuerfesten Werkstoffs (ohne Wasser).

Der Anteil an basischer Komponente im Werkstoff beträgt 1 bis 4 Gew.-%.

Bevorzugt liegen die saure Komponente und die basische Komponente der Bindemittelkomponente in derartigen Mengenanteilen im ungeformten feuerfesten Werkstoff vor, dass sich diese nach Zugabe von Wasser vollständig neutralisieren, also insbesondere beispielsweise derart in einer Säure-Base-Reaktion miteinander reagieren, dass nach vollständiger Reaktion praktisch keine saure Komponente und keine basische Komponente der Bindemittelkomponente mehr im feuerfesten Werkstoff vorliegen, oder allenfalls in äußerst geringen Restmengen, beispielsweise in Mengenanteilen von ≤ 1 Gew.-%, von ≤ 0,5 Gew.-% oder von nur ≤ 0,1 Gew.-%.

Bevorzugt kann vorgesehen sein, dass die saure Komponente und die basische Komponente der Bindemittelkomponente gut wasserlöslich sind, so dass sich diese leicht in dem Anmachwasser lösen und vollständig miteinander reagieren können.

Die Reaktion der sauren Komponente und der basischen Komponente kann noch weiter verbessert werden, wenn diese in feinteiliger Form, bevorzugt gleichmäßig verteilt im ungeformten feuerfesten Werkstoff vorliegen. Nach einer Ausführungsform liegen die saure Komponente und die basische Komponente der Bindemittelkomponente in feinteiliger Form, bevorzugt mit einer Kornobergrenze von 1000 µm oder von 500 µm, bestimmt nach DIN 52 098, vor.

Die saure Komponente und die basische Komponente liegen demnach bevorzugt in einer trockenen, beziehungsweise riesel- oder schüttfähigen Form in dem ungeformten feuerfesten Werkstoff vor.

Ferner liegen die saure Komponente und die basische Komponente in einer lagerstabilen Form im ungeformten feuerfesten Werkstoff vor, so dass der ungeformte feuerfeste Werkstoff (im nicht mit Wasser angemachten Zustand) einfach gelagert und transportiert werden kann, ohne dass die saure Komponente und die basische Komponente (im trockenen Zustand) untereinander oder mit der feuerfesten Basiskomponente reagieren.

Der Gesamtanteil an Bindemittelkomponente im ungeformten feuerfesten Werkstoff kann beispielsweise bei ≥ 1 Gew.-% liegen, also beispielsweise auch bei ≥ 1,5 Gew.-%, ≥ 2 Gew.-%, ≥ 2,5 Gew.-%, ≥ 3 Gew.-% oder ≥ 3,5 Gew.-%. Die Höchstmenge an Bindemittelkomponente im Werkstoff kann beispielsweise bei 20 Gew.-% liegen, also beispielsweise auch bei ≤ 18 Gew.-%, ≤ 16 Gew.-%, ≤ 14 Gew.-%, ≤ 12 Gew.-%, ≤ 10 Gew.-%, < 8 Gew.-% oder ≤ 6 Gew.-%. Demnach kann der Anteil an Bindemittelkomponente im Werkstoff beispielsweise im Bereich von 1 bis 20 Gew.-% liegen, also beispielsweise auch im Bereich von 1,5 bis 16 Gew.-%, 1,5 bis 12 Gew.-% oder im Bereich von 2 bis 10 Gew.-%.

Grundsätzlich kann die feuerfeste Basiskomponente des ungeformten feuerfesten Werkstoffs eine beliebige feuerfeste Basiskomponente, insbesondere eine anorganische feuerfeste Basiskomponente darstellen.

Bevorzugt handelt es sich bei der feuerfesten Basiskomponente im ungeformten feuerfesten Werkstoff um eine basische feuerfeste Basiskomponente, bevorzugt um eine feuerfeste Basiskomponente auf Basis MgO.

Eine basische feuerfeste Basiskomponente kann beispielsweise auf wenigstens einem der folgenden Stoffe basieren: Magnesia (insbesondere Sintermagnesia), Magnesiaspinell, Doloma, Olivin, Kalkstein.

Der Anteil an feuerfester Basiskomponente im ungeformten feuerfesten Werkstoff kann beispielsweise bei ≥ 88 Gew.-% liegen, also beispielsweise auch bei ≥ 90 Gew.-% oder bei ≥ 92 Gew.-%. Der Höchstänteil an feuerfester Basiskomponente kann beispielsweise bei ≤ 98,5 Gew.-% liegen, also beispielsweise auch bei ≤ 97 Gew.-% oder bei ≤ 96 Gew.-%. Demnach kann der Anteil an feuerfester Basiskomponente im Werkstoff beispielsweise im Bereich von 88 bis 98,5 Gew.-% liegen, also beispielsweise auch im Bereich von 90 bis 97 Gew.-% oder im Bereich von 92 bis 96 Gew.-%.

Die feuerfeste Basiskomponente kann beispielsweise in einer Körnung ≤ 5 mm vorliegen und beispielsweise in einer Körnung > 0,5 mm oder > 1 mm. Demnach kann die feuerfeste Basiskomponente beispielsweise in einer Körnung von >0 bis 5 mm, >0 bis 3mm, >0 bis 1 mm, >1 bis 5 mm oder >1 bis 3mm vorliegen.

Der (nicht mit Wasser angemachte) ungeformte feuerfeste Werkstoff liegt bevorzugt in schüttfähiger Form vor, also als rieselfähige beziehungsweise krümelige Masse beziehungsweise als Trockenmischung.

Zur Herstellung einer gebrauchsfertigen, also erdfeuchten (plastischen) Masse aus dem erfindungsgemäßen ungeformten feuerfesten Werkstoff wird dieser mit Wasser angemacht. Bevorzugt wird dem Werkstoff eine solche Menge an Wasser zugegeben, dass dieser eine erdfeuchte, insbesondere eine erdfeuchte krümelige Konsistenz erhält. Der Werkstoff wird mit einer Menge an Wasser von 1 bis 5 Gew.-% angemacht.

Ein Verfahren zur Herstellung eines erdfeuchten ungeformten feuerfesten Werkstoffs aus dem erfindungsgemäßen ungeformten feuerfesten Werkstoff kann beispielsweise die folgenden aufeinanderfolgenden Schritte aufweisen:
- Erstellung des hierin beschriebenen ungeformten feuerfesten Werkstoffs;
- Anmachen des Werkstoffs mit 1 bis 5 Gew.-% Wasser zur Erstellung eines erdfeuchten ungeformten feuerfesten Werkstoffes.

Wie zuvor ausgeführt, kann der ungeformte feuerfeste Werkstoff insbesondere mit einer solchen Menge an Wasser angemacht werden, dass dieser eine erdfeuchte Konsistenz erhält.

Hierzu kann der ungeformte feuerfeste Werkstoff bevorzugt mit den vorgenannten Mengen an Wasser angemacht werden.

Die Zugabe von Wasser zu dem ungeformten feuerfesten Werkstoff kann bevorzugt in einem Mischer, insbesondere beispielsweise in einem Zwangsmischer oder einem Durchlaufmischer erfolgen, oder in einer Spritzmaschine, beispielsweise einer Druckkesselspritzmaschine, bei der die Wasserzugabe bevorzugt am Ende des Schlauches erfolgt.

Der ungeformte feuerfeste Werkstoff kann bevorzugt zur Schablonenhinterfüllung eingesetzt werden. Entsprechend kann der mit Wasser angemachte, also plastische (erdfeuchte) ungeformte feuerfeste Werkstoff, insbesondere unmittelbar oder kurz nach den Anmachen und Mischen, in einem weiteren Schritt hinter eine Schablone gefüllt werden. Insbesondere kann der ungeformte feuerfeste Werkstoff zur Schablonenhinterfüllung in einem Tundish verwendet werden.

Der erdfeuchte ungeformte feuerfeste Werkstoff hat ein äußerst günstiges Aushärteverhalten. So weist der erdfeuchte feuerfeste Werkstoff bereits nach verhältnismäßig kurzer Zeit eine solche Festigkeit auf, dass er nicht durch weitere Hilfsmittel, wie beispielsweise Schablonen, in Form gehalten werden muss. Beispielsweise kann man den erdfeuchten feuerfesten Werkstoff für einen Zeitraum von nur ≥ 10 Minuten, also beispielsweise auch für einen Zeitraum von ≥ 30 Minuten oder ≥ 1 Stunde aushärten lassen. Die maximale Aushärtezeit beträgt beispielsweise ≤ 4 Stunden, also beispielsweise auch ≤ 3 Stunden oder ≤ 2 Stunden. Demnach beträgt die Aushärtzeit beispielsweise 10 Minuten bis 4 Stunden, also beispielsweise auch 30 Minuten bis 2 Stunden.

Nach der Verfestigung beziehungsweise Aushärtung können etwaige Hilfsmittel, mit denen der erdfeuchte feuerfeste Werkstoff in Form gehalten wird, entfernt werden, beispielsweise Schablonen gezogen werden. Der ausgehärtete feuerfeste Werkstoff ist anschließend einsatzbereit.

Der ungeformte feuerfeste Werkstoff zeichnet sich insbesondere auch dadurch aus, dass diesem das Wasser bei Raumtemperatur zugegeben werden kann, der ungeformte feuerfeste Werkstoff also nicht extern erwärmt werden muss, um nach Zugabe des Wassers zum Werkstoff eine Bindewirkung der Bindemittelkomponente hervorzurufen. Vielmehr kann bei dem erfindungsgemäßen ungeformten feuerfesten Werkstoff eine exotherme Reaktion der sauren Komponente und der basischen Komponente nach Zugabe von Wasser eine etwaig notwendige, erhöhte Temperatur des Werkstoffs liefern.

Der ungeformte feuerfeste Werkstoff kann grundsätzlich auf beliebige Art und Weise verwendet werden. Bevorzugt ist eine Verwendung des ungeformten feuerfesten Werkstoffs als Tundishmasse vorgesehen. So kann der ungeformte feuerfeste Werkstoff als Tundishmasse für monolithische Konstruktionen oder für Reparaturen eingesetzt werden.

Die nachfolgenden Rezepturen zeigen vier Beispiele von Zusammensetzungen für ungeformte feuerfeste Werkstoffe nach der Erfindung:
Beispiel 1:

| **Komponente** | **Material** | **Anteil [Gew.-%]** |
|---|---|---|
| Basiskomponente | Sintermagnesia | 72 |
| Basiskomponente | Olivin | 22 |
| Saure Komponente | Zitronensäure | 4 |
| Basische Komponente | Kalkhydrat | 2 |

Beispiel 2:

| **Komponente** | **Material** | **Anteil [Gew.-%]** |
|---|---|---|
| Basiskomponente | Sintermagnesia | 73 |
| Basiskomponente | Olivin | 22 |
| Saure Komponente | Borsäure | 1 |
| Saure Komponente | Amidosulfonsäure | 2 |
| Basische Komponente | Kalkhydrat | 2 |

Beispiel 3:

| **Komponente** | **Material** | **Anteil [Gew.-%]** |
|---|---|---|
| Basiskomponente | Sintermagnesia | 72 |
| Basiskomponente | Olivin | 22 |
| Saure Komponente | Natriummetaphosphat | 4 |
| Basische Komponente | Kalkhydrat | 2 |

Beispiel 4:

| **Komponente** | **Material** | **Anteil [Gew.-%]** |
|---|---|---|
| Basiskomponente | Sintermagnesia | 72 |
| Basiskomponente | Olivin | 24 |
| Saure Komponente | Natriummetaphosphat | 2 |
| Basische Komponente | Calciumoxid | 2 |

Der ungeformte feuerfeste Werkstoff gemäß den vier vorgenannten Rezepturen wurde jeweils unter Zugabe von 3 Gew.-% Anmachwasser in einem Labormischer gemischt und folgende Untersuchungen des Abbindeverlaufs durchgeführt:
Die Verfestigung wird mittels einer Apparatur nach DIN-EN 1015-4 (1998) "Prüfverfahren für Mörtel für Mauerwerk, Teil 4, Bestimmung der Konsistenz von Frischmörteln (mit Eindringgerät)" in 2-Minuten-Intervalen bestimmt. Die Zeitspanne gerechnet von der Wasserzugabe bis zum Erreichen einer Eindringtiefe des Fallkörpers von ≤ 1mm ist die Verfestigungszeit. Die Messung der Temperaturerhöhung durch die exotherme Säure-Basen-Reaktion erfolgte mittels zusätzlich in die Form für den Probekörper eingebautem Temperaturfühler.

Die mit den Versuchsmischungen erreichten Ergebnissen waren wie folgt:
Für Beispiel 1:
   Temperaturerhöhung: 12-26 °C
   Verfestigungszeit: 8-14 min
Für Beispiel 2:
   Temperaturerhöhung: 8-18 °C
   Verfestigungszeit: 30-40 min
Für Beispiel 3:
   Temperaturerhöhung: 14-28 °C
   Verfestigungszeit: 10-16 min
Für Beispiel 4:
   Temperaturerhöhung: 7-15 °C
   Verfestigungszeit: 18-26 min

Für die Erprobung auf Anwendung als Tundishmasse wurden die gleichen Versätze in ausreichender Menge hergestellt und nach Mischung mit 3 Gew.% Anmachwasser die jeweils erhaltenen erdfeuchten ungeformten feuerfesten Werkstoffe zur Schablonenhinterfüllung in einem Tundish verwendet.

Die dabei bestimmten Verfestigungszeiten (gerechnet von der Zugabe des Anmachwassers bis zum frühesten Zeitpunkt, zu dem die Schablone gezogen werden konnte) und die jeweils gemessene Temperaturerhöhung waren wie folgt:
Für Beispiel 1:
   Temperaturerhöhung: 15 -22 °C
   Verfestigungszeit: 10-15 min
Für Beispiel 2:
   Temperaturerhöhung: 5-18 °C
   Verfestigungszeit: 40-50 min
Für Beispiel 3:
   Temperaturerhöhung: 15-25 °C
   Verfestigungszeit: 10-15 min
Für Beispiel 4:
   Temperaturerhöhung: 10-20 °C
   Verfestigungszeit: 15-25 min

## Patentansprüche

1. Ungeformter feuerfester Werkstoff mit
a. einer feuerfesten Basiskomponente und
b. einer Bindemittelkomponente, wobei die Bindemittelkomponente, bezogen auf den Werkstoff,
b1. eine saure Komponente aus wenigstens einem der folgenden Stoffe: Säure, Salz und/oder Ester einer Säure als Sulfonat, Sulphat oder Carbonat, in einem Anteil von 1,5 bis 6 Gew.-%,
b2. eine basische Komponente in Form wenigstens einer der folgenden Stoffe: Urotropin, Calciumoxid, Calciumhydroxid, Natriumhydroxid, Kaliumhydroxid, Magnesiumhydroxid in einem Anteil von 1 bis 4 Gew.-% enthält, und
c. durch Zugabe von 1 bis 5 Gew.-% Wasser eine erdfeuchte, krümelige Konsistenz erhält und nach einer exothermen Reaktion der Bindemittelkomponente verfestigbar ist.

2. Werkstoff nach Anspruch 1 mit einer sauren Komponente in Form wenigstens einer schwachen bis mittelschwachen organischen Säure.

3. Werkstoff nach Anspruch 1 mit einer sauren Komponente in Form wenigstens einer der folgenden Säuren: Zitronensäure, Amidosulfonsäure.

4. Werkstoff nach Anspruch 1, bei der die Bindemittelkomponente neben der sauren Komponente und der basischen Komponente keine weitere Bindemittelkomponente aufweist.

5. Werkstoff nach Anspruch 1 mit einer sauren Komponente in Form wenigstens einer Säure und mit einer basischen Komponente in Form wenigstens einer Base, die unter Zugabe von Wasser zu dem Werkstoffe in einer Säure-Base-Reaktion reagieren.

6. Werkstoff nach Anspruch 1, mit einer sauren Komponente in Form wenigstens einer Säure und mit einer basischen Komponente in Form wenigstens einer Base, die unter Zugabe von Wasser zu dem Werkstoff in einer exothermen Reaktion reagieren.

7. Werkstoff nach Anspruch 6, bei dem durch die exotherme Reaktion die Temperatur des Werkstoffes um 5 bis 30 °C erhöhbar ist.

8. Werkstoff nach Anspruch 1 mit einer basischen feuerfesten Basiskomponente.

9. Werkstoff nach Anspruch 1 mit einer basischen feuerfesten Basiskomponente auf Basis wenigstens eines der folgenden Stoffe: Magnesia, Olivin.

10. Verfahren zur Erstellung eines erdfeuchten ungeformten feuerfesten Werkstoffes mit folgenden aufeinanderfolgenden Schritten:
A. Erstellung eines Werkstoff nach Anspruch 1;
B. Anmachen des Werkstoffes mit 1 bis 5 Gew.-% Wasser zur Erstellung eines erdfeuchten ungeformten feuerfesten Werkstoffes.

## Claims

1. An unformed refractory material having
a. a refractory basic component and
b. a binding agent component, wherein the binding agent component, relative to the material,
b1. comprises an acid component from at least one of the following substances: acid, salt and/or esters of an acid as a sulphonate, sulphate or carbonate in a fraction of 1.5 to 6 % by weight,
b2. a basic component in the form of at least one of the following substances: urotropine, calcium oxide, calcium hydroxide, sodium hydroxide, potassium hydroxide, magnesium hydroxide in a fraction of 1 to 4 % by weight and
c. acquires an earth-moist, crumbly consistency through the addition of 1 to 5 % by weight water and can be consolidated following an exothermic reaction of the binding agent component.

2. The material according to claim 1 having an acid component in the form of at least a weak to moderately weak organic acid.

3. The material according to claim 1 having an acid component in the form of at least one of the following acids: citric acid, amidosulfonic acid.

4. The material according to claim 1, wherein the binding agent component exhibits no further binding agent component in addition to the acid component and the basic component.

5. The material according to claim 1 having an acid component in the form of at least one acid and having a basic component in the form of at least one base which react upon the addition of water to the material with an acid-base reaction.

6. The material according to claim 1 having an acid component in the form of at least one acid and having a basic component in the form of at least one base which react upon the addition of water to the material with an exothermic reaction.

7. The material according to claim 6, wherein the temperature of the material can be increased by 5 to 30 °C due to the exothermic reaction.

8. The material according to claim 1 having a basic refractory base component.

9. The material according to claim 1 having a basic refractory basic component based on at least one of the following substances: magnesia, olivine.

10. A method of producing an earth-moist, unformed refractory material having the following consecutive steps:
A. creation of a material according to claim 1;
B. mixing the material with 1 to 5 % by weight water for creation of an earth-moist, unformed refractory material.

## Revendications

1. Matière réfractaire non façonnée, avec
a. un composant de base réfractaire et
b. un composant liant, en rapport à la matière, le composant liant
b1. contenant un composant acide en au moins l'une des substances suivantes : acide, sel et/ou ester d'un acide en tant que sulfonate, sulfate ou carbonate, dans une part de 1,5 à 6 % en poids,
b.2 contenant un composant basique sous la forme d'au moins l'une des substances suivantes : urotropine, oxyde de calcium, hydroxyde de calcium, hydroxyde de sodium, hydroxyde de potassium, hydroxyde de magnésium, dans une part de 1 à 4 % en poids et
c. par ajout de 1 à 5 % en poids d'eau, adoptant une consistance grumeleuse de terre humide et étant durcissable après une réaction exothermique du composant liant.

2. Matière selon la revendication 1, avec un composant acide sous forme d'au moins un acide organique faible à moyen faible.

3. Matière selon la revendication 1, avec un composant acide sous la forme d'au moins l'un des acides suivants : acide citrique, acide amidosulfonique.

4. Matière selon la revendication 1, dans laquelle, parallèlement au composant acide et au composant basique, le composant liant ne comporte aucun composant liant supplémentaire.

5. Matière selon la revendication 1, avec un composant acide sous la forme d'au moins un acide et avec un composant basique sous la forme d'au moins une base, qui lorsqu'on ajoute de l'eau à la matière réagissent en une réaction acide-base.

6. Matière selon la revendication 1, avec un composant acide sous la forme d'au moins un acide et avec un composant basique sous la forme d'au moins une base, qui lorsqu'on ajoute de l'eau à la matière réagissent en une réaction exothermique.

7. Matière selon la revendication 6, pour laquelle, par la réaction exothermique, la température de la matière peut être augmentée de la valeur de 5 à 30 °C.

8. Matière selon la revendication 1, avec un composant de base réfractaire basique.

9. Matière selon la revendication 1, avec un composant de base réfractaire basique sur la base d'au moins l'une des substances suivantes : magnésie, olivine.

10. Procédé destiné à produire une matière réfractaire non façonnée, à consistance de terre humide, avec les étapes successives suivantes :
A. Production d'une matière selon la revendication 1 ;
B. Gâchage de la matière avec de 1 à 5 % en poids d'eau, pour créer une matière réfractaire non façonnée à consistance de terre humide.
